**Europäisches Patentamt**

**European Patent Office**

**Office européen des brevets**

(19)

(11) Veröffentlichungsnummer: **0 015 371 B1**

(12) **EUROPÄISCHE PATENTSCHRIFT**

(45) Veröffentlichungstag der Patentschrift:
26.08.81

(51) Int. Cl.³: **C 01 B 7/20,** C 01 B 25/234, B 01 D 53/34

(21) Anmeldenummer: **80100303.9**

(22) Anmeldetag: **22.01.80**

(54) **Verfahren zur Abtrennung von Fluorverbindungen aus den Brüden der Phosphorsäureeindampfung.**

(30) Priorität: **07.02.79 DE 2904547**

(43) Veröffentlichungstag der Anmeldung:
**17.09.80 Patentblatt 80/19**

(45) Bekanntmachung des Hinweises auf die Patenterteilung:
**26.08.81 Patentblatt 81/34**

(84) Benannte Vertragsstaaten:
**BE DE FR GB NL SE**

(56) Entgegenhaltungen:
**DE-A1-2 534 617**
**DE-A1-2 610 810**
**DE-B-1 210 002**
**DE-D-1 277 217**
**US-A-3 760 565**
**US-A-3 893 830**

(73) Patentinhaber: **BASF Aktiengesellschaft,**
**Carl-Bosch-Strasse 38, D-6700 Ludwigshafen (DE)**

(72) Erfinder: **Brunold, Andreas, An der Tuchbleiche 3,**
**D-6712 Bobenheim-Roxheim 2 (DE)**
Erfinder: **Kroetzsch, Peter, Dr. Dipl.-Ing.,**
**Von-Siemens-Strasse 17, D-6834 Ketsch (DE)**
Erfinder: **Diehl, Lothar, Dr., Budapester Strasse 45,**
**D-6700 Ludwigshafen (DE)**

Verfahren zur Abtrennung von Fluorverbindungen aus den Brüden der Phosphorsäureeindampfung

Vorliegende Erfindung betrifft ein Verfahren zur Abtrennung und Rückgewinnung von Fluorverbindungen aus den Brüden der Phosphorsäureeindampfung.

Bei der Herstellung von Nass-Phosphorsäure werden Rohphosphate mit Mineralsäuren, insbesondere Schwefelsäure, behandelt und die dabei gewonnene ca. 30 gew.-%ige Phosphorsäure unter vermindertem Druck auf ca. 55 Gew.-% aufkonzentriert. Die im Phosphatgestein enthaltenen Fluoride entweichen bei der Konzentrierung mit dem Wasserdampf. Aus diesem Grunde können die Dämpfe nicht ohne weiteres in die Umgebung abgelassen werden, sondern es müssen vorher die Fluoridkomponenten aus ihnen entfernt werden, wobei es wünschenswert ist, dass die Fluorverbindungen in möglichst konzentrierter und wirtschaftlich verwertbarer Form anfallen. In der Dampfphase liegen die Fluorverbindungen als Fluorwasserstoff und Siliziumtetrafluorid im ungefähren Molverhältnis 2:1 vor. Bei deren Übergang in die Flüssigphase entstehen wässrige Lösungen von Kieselfluorwasserstoffsäure.

Für die Rückgewinnung der in den Brüden der Phosphorsäureeindampfung enthaltenen Fluorverbindungen sind bereits mehrere Verfahren bekannt geworden.

So werden gemäss der DE-A 26 10 810 die Brüden in zwei Stufen kondensiert, wobei der Hauptteil des Dampfes und der in ihm enthaltenen Fluorverbindungen in der ersten Stufe niedergeschlagen werden. Während das in der zweiten Stufe anfallende Kondensat eine sehr geringe Fluorkonzentration < 0,1 ppm aufweist, weist der in der ersten Stufe anfallende Hauptteil des Kondensates einen Fluorgehalt von etwa 2 Gew.-% auf. Dieser Gehalt ist einerseits zu hoch, als dass das anfallende Kondensat verworfen werden kann, andererseits ist er aber zu niedrig, als dass die in ihm enthaltenen Fluorverbindungen wirtschaftlich verwertet werden können.

Bei dem in der deutschen Patentschrift 1 277 217 beschriebenen Verfahren wird die Rückgewinnung der Fluorverbindungen ohne übermässigen Anfall von Kondenswasser durchgeführt. Dieses Verfahren ist im wesentlichen dadurch gekennzeichnet, dass man die fluorhaltigen Brüden mit einer Fluorverbindungen absorbierenden Flüssigkeit bei solchen Temperaturen in Berührung bringt, dass zwar die Fluorverbindungen absorbiert, aber die Kondensation von in den Dämpfen enthaltenen Wasser weitgehend vermieden wird. Die anfallenden Lösungen können von 5 bis 28 Gew.-% $H_2SiF_6$ enthalten. Bei Konzentrationen von ca. 15 % Gew.-% $H_2SiF_6$ in der Absorptionslösung werden etwa 90 bis 95 % der in den Dämpfen enthaltenen Fluorverbindungen entfernt. Die Entfernungsgrade fallen jedoch mit steigender Konzentration der Absorptionslösung stark ab. Dies bedeutet in anderen Worten, dass das Verfahren bei niedrigen $H_2SiF_6$-Konzentrationen der Absorptionslösung zwar eine ausreichende Entfernung der Fluorverbindungen aus den Brüden gewährleistet dass aber eine Abtrennung der Fluorverbindungen aus den Absorptionslösungen wegen ihrer geringen Konzentration sehr aufwendig ist. Andererseits ist bei höheren $H_2SiF_6$-Konzentrationen eine Isolierung der Fluorverbindungen wirtschaftlich möglich, jedoch ist dann der Entfernungsgrad der Fluorverbindungen aus den Brüden unbefriedigend.

Der vorliegenden Erfindung lag daher die Aufgabe zugrunde, ein Verfahren zur Artrennung von Fluorverbindungen aus den Brüden der Phosphorsäureeindampfung durch Auswaschen mit wässrigen Lösungen von Kieselfluorwasserstoffsäure bei vermindertem Druck und so weit erhöhten Temperaturen, dass eine Wasserdampfkondensation praktisch nicht stattfindet, anzugeben, bei dem einerseits hohe $H_2SiF_6$-Konzentrationen in den Absorptionslösungen bei gleichzeitig hohen Entfernungsgraden der Fluorverbindungen aus den Brüden erzielt werden.

Es wurde nun gefunden, dass diese Aufgabe dadurch gelöst werden kann, dass man die wässrige Lösung der Kieselfluorwasserstoffsäure in den oberen Teil einer Waschzone über den gesamten Querschnitt der Waschzone verteilt mit einer Geschwindigkeit von 15 m/s bis 40 m/s in feiner Verteilung eindüst und die Brüden im Gleichstrom mit den wässrigen Lösungen der Kieselfluorwasserstoffsäure durch die Waschzone mit einer Geschwindigkeit von 5 m/s bis 30 m/s bei Verweilzeiten von 0,4 bis 1,5 s führt.

Durch die erfindungsgemässe Führung der Brüden und der feinverteilten wässrigen Kieselflusssäurelösungen im Gleichstrom durch die Waschzone ergibt sich eine grosse Stoffaustauschfläche zwischen Dampf und Flüssigkeit, andererseits wird infolge des Impulsaustausches eine Druckerhöhung in der Waschzone in Strömungsrichtung bewirkt. Hierdurch wird es möglich, besonders wirksame Tropfenabscheider am Ende der Waschzone einzusetzen, ohne dass die Temperatur in den nachgeschalteten Einspritzkondensatoren übliche Werte unterschreiten muss.

Dadurch wird es weiterhin ermöglicht, bei mehreren hintereinandergeschalteten Waschzonen das Mitreissen von Tropfen von einer vorangehenden in die folgende Waschzone zu minimieren, was ebenfalls zu einer Verbesserung der Waschleistung jeder Waschstufe beiträgt.

Die wässrigen Lösungen der Kieselfluorwasserstoffsäure werden vorzugsweise mit einer Geschwidingkeit von 20 bis 30 m/s eingedüst. Die Geschwindigkeit, mit der die Brüden vorzugsweise durch die Waschzone geleitet werden, beträgt 15 bis 25 m/s und ihre Verweilzeiten vorzugsweise 0,6 bis 1 s.

Die gewonnenen wässrigen Lösungen von Kieselfluorwasserstoffsäure, die vorzugsweise im Kreis geführt werden, haben einen $H_2SiF_6$-Gehalt von 20 bis 28 Gew.-%.

In der Waschzone werden in Abhängigkeit von den Bedingungen bei der Eindampfung Drücke von 60 bis 100 mbar und Temperaturen von 40 bis 60 °C eingestellt. In jedem Fall werden nach dem vorgegebenen Druck solche Temperaturen gewählt, dass praktisch keine Kondensation von Wasser eintritt.

Bei dem erfindungsgemässen Verfahren fallen Absorptionslösungen an, deren Gehalt an $H_2SiF_6$ etwa 20 bis 28 Gew.-% beträgt, die wegen ihrer hohen Konzentration in wirtschaftlicher Weise weiterverarbeitet werden können. Gleichzeitig liegen die praktischen Absorptionsausbeuten sehr nahe an den theoretisch möglichen Absorptionsausbeuten. So beträgt z.B. bei einer zweistufig betriebenen Absorption die theoretisch mögliche Gesamtausbeute 99,5%, die praktische Gesamtausbeute liegt in jedem Fall deutlich über 95%. Dabei ergeben sich Fluorgehalte in den am Verfahrensende geschalteten Einspritzkondensatoren von weniger als 50 mg F/l, obwohl man hier bei üblichen Kühlwassertemperaturen mit der theoretisch minimalen Wassereinspritzmenge auskommt.

Das erfindungsgemässe Verfahren sei im folgenden an Hand des Beispieles näher erläutert.

Beispiel

Durch Leitung 1 wird eine fluoridhaltige Dünnphosphorsäure in einem Verdampfer 2 bei einem Absolutdruck von 80 mbar bei 75 °C zu Dicksäure aufkonzentriert, die durch Leitung 3 aus dem Verdampfer abgezogen wird. Die durch Leitung 4 abgezogenen Brüden enthalten 3,2 Gew.-% Fluor in Form von $SiF_4$ und HF-Dampf. Im Tropfenabscheider 5 wird mitgerissene Phosphorsäure abgeschieden und gelangt über die Verbindungsleitung 6 zurück in den Eindampfer 2.

Die von Phosphorsäure gereinigten Brüden strömen durch Leitung 7 in den ersten Gleichstromwäscher 8 und durchströmen diesen mit einer Geschwindigkeit von 20,7 m/s. Dort gelangen sie in Kontakt mit fein verteilter Kieselfluorwasserstoffsäurelösung der Konzentration 25 Gew.-% $H_2SiF_6$, die mit einer Geschwindigkeit von 25 m/s in den Wäscher eingedüst wird. Die Temperatur im Wäscher beträgt 48 °C. Die Kieselfluorwasserstoffsäurelösung verlässt zusammen mit den Brüdendämpfen, deren Verweilzeit in dem Wäscher 0,8 s beträgt, den Wäscher 8 über die Rohrverbindung 9 und gelangt in den Tropfenabscheider 10. Dort trennen sich Dampf und Flüssigkeit. Die Kieselfluorwasserstoffsäure strömt in einem geschlossenen Kreislauf über die Leitung 11, der Pumpe 12 und die Leitung 13 zurück zum Wäscher 8.

Aus diesem Kreislauf wird durch Leitung 14 entsprechend der Kieselfluorwasserstoffsäurebildung im Wäscher 8 eine 15 gew.-%ige Kieselfluorwasserstoffsäure entnommen, während andererseits 8 gew.-%ige Kieselfluorwasserstoffsäure aus der zweiten Waschstufe über Leitung 15 zufliesst.

Die den Abscheider 10 durch Leitung 16 verlassenden Dämpfe enthalten 0,99 Gew.-% Fluor, einschliesslich mitgerissener Kieselfluorwasserstoffsäuretröpfchen und gelangen in die zweite Waschstufe, bestehend aus dem Gleichstromwäscher 17 und dem Tropfenabscheider 19 mit dem Flüssigkeitskreislauf über Leitungen 18, 20 und 22 mit der Pumpe 21. Im Wäscher 17 werden, abgesehen von der Kieselfluorwasserstoffsäurekonzentration in der Waschlösung, die gleichen Bedingungen wie im Wäscher 8 eingestellt.

Bei 23 fliesst diesem Waschkreis über eine Flüssigkeitsstandregelung Frischwasser oder ein Teil des durch Leitung 27 abgezogenen Abwassers zu, entsprechend der Abgabe an 8 gew.-%iger Säure an die erste Waschstufe über Leitung 15.

Die den Abscheider 19 durch Leitung 24 verlassenden Brüden enthalten 0,09 Gew.-% Fluor, einschliesslich mitgerissener Kieselfluorwasserstoffsäuretropfen. Diese Brüden werden im Einspritzkondensator 25 mit durch Leitung 26 eingeführten Kühlwasser (25 °C) niedergeschlagen und werden durch Leitung 27 abgezogen. Die Konzentration im Abwasser beträgt 30 mg F/l. Durch Leitung 28 werden Inertgase von einer Vakuumanlage abgesaugt.

Wesentliche Vorteile dieser Anordnung resultieren durch die im Gleichstrom betriebenen Wäscher 8 und 17, wodurch einerseits dank der dabei möglichen sehr feinen Flüssigkeitsverteilung eine grosse Stoffaustauschfläche zwischen Dampf und Flüssigkeit ermöglicht wird, andererseits über Impulsaustausch eine Druckerhöhung in den Wäschern bewirkt wird. Bei einem Massenstromverhältnis Flüssigkeit/Dampf = 33 und einem Düsenvordruck $p_{abs}$ = 4,0 bar stellt sich die Leitung 9 ein Absolutdruck von 75,5 mbar ein, gegenüber 72 mbar in Leitung 7, d.h. ein Druckgewinn von 3,5 mbar. Analog liegen die Verhältnisse im Wäscher 17 mit 68 mbar im oberen und 71,5 mbar im unteren Teil.

Dieser Druckgewinn in den Wäschern erlaubt die Anwendung besonders wirksamer Tropfenabscheider 10 und 19, so dass ein Mitreissen von Flüssigkeit mit dem Dampf von der ersten in die zweite Waschstufe praktisch ausgeschlossen ist. Die Flüssigkeitsmenge, die mit den durch Leitung 16 abgezogenen Dämpfen mitgerissen wird, beträgt, bezogen auf die durch Leitung 15 zulaufende Flüssigkeitsmenge, etwa 1,8%. Vergleichsweise liegen solche Werte bei üblichen Kolonneneinbauten im Bereich von etwa 10%. Diese geringe Mitreissrate trägt wesentlich zu der hohen erzielbaren Fluorabreicherung je Waschstufe von 90% der Theorie bei, entsprechend einer Gesamtabreicherung bzw. einer Gesamtausbeute von ca. 97%.

Da der Druckgewinn der Wäscher 8 bzw. 17 den Druckverlust der Abscheider 10 bzw. 19 zum grossen Teil ausgleicht, ist dieses Verfahren bei den auf der einen Seite von der Phosphorsäureeindampfung 2 und auf der anderen Seite von der Wassertemperatur im Kondensator 25 vorgegebenen Druckverhältnissen einsetzbar. Die Absolutdrucke sind bei der Eindampfung 80 mbar, bei der Kondensation 65 mbar.

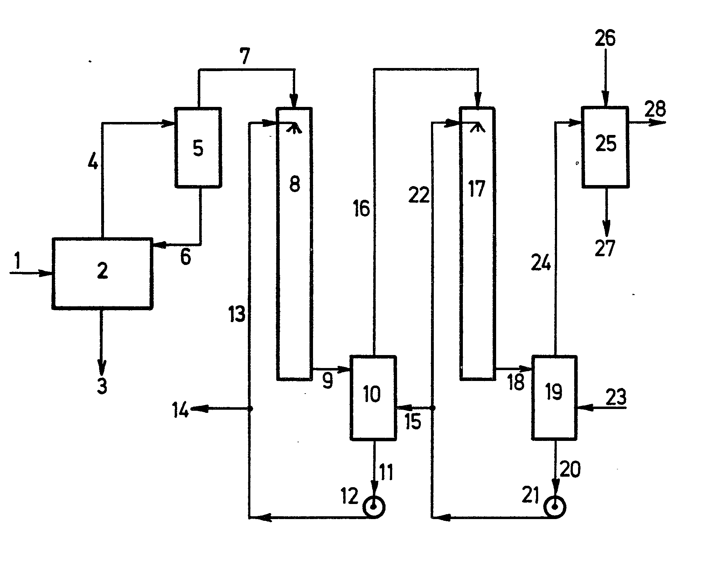

## Patentansprüche

1. Verfahren zur Abtrennung von Fluorverbindungen aus den Brüden der Phosphorsäureeindampfung durch Auswaschen mit wässrigen Lösungen von Kieselfluorwasserstoffsäure bei vermindertem Druck und solchen Temperaturen, dass eine Wasserdampfkondensation weitgehend vermieden wird, dadurch gekennzeichnet, dass man die wässrige Lösung der Kieselfluorwasserstoffäure in den oberen Teil einer Waschzone über den gesamten Querschnitt der Waschzone verteilt mit einer Geschwindigkeit von 15 m/s bis 40 m/s in feiner Verteilung eindüst und die Brüden im Gleichstrom mit den wässrigen Lösungen der Kieselfluorwasserstoffsäure durch die Waschzone mit einer Geschwindigkeit von 5 m/s bis 30 m/s bei Verweilzeiten von 0,4 bis 1,5 s führt.

2. Verfahren nach Anspruch 1, dadurch gekennzeichnet, dass man die wässrige Lösung der Kieselfluorwasserstoffsäure mit einer Geschwindigkeit von 20 bis 30 m/s in die Waschzone eindüst.

3. Verfahren nach Ansprüchen 1 bis 2, dadurch gekennzeichnet, dass man die Brüden mit einer Geschwindigkeit von 15 bis 25 m/s durch die Waschzone leitet.

4. Verfahren nach Ansprüchen 1 bis 3, dadurch gekennzeichnet, dass man Verweilzeiten der Brüden von 0,6 bis 1 s einhält.

5. Verfahren nach Ansprüchen 1 bis 4, dadurch gekennzeichnet, dass die wässrigen Lösungen der gewonnenen Kieselfluorwasserstoffsäure eine Konzentration von 20 bis 28 Gew.-% $H_2SiF_6$ aufweisen.

## Revendications

1. Procédé pour l'extraction des composés fluorés des vapeurs résultant de la concentration d'acide phosphorique par lavage sous pression réduite et à des températures, auxquelles la condensation de la vapeur d'eau est évitée dans une large mesure, avec des solutions aqueuses d'acide fluosilicique, caractérisé en ce que la solution aqueuse d'acide fluosilicique est injectée à l'état finement divisé dans la partie supérieure d'une zone de lavage, répartie sur toute la section de la zone de lavage, avec une vitesse comprise entre 15 et 40 m/s, les vapeurs traversant la zone de lavage en courant parallèle à celui de la solution aqueuse d'acide fluosilicique avec une vitesse comprise entre 5 et 30 m/s, la durée de séjour des vapeurs se situant entre 0,4 et 1,5 s.

2. Procédé suivant la revendication 1, caractérisé en ce que la solution aqueuse d'acide fluosilicique est injectée dans la zone de lavage avec une vitesse comprise entre 20 et 30 m/s.

3. Procédé suivant l'une des revendications 1 et 2, caractérisé en ce que le passage des vapeurs dans la zone de lavage se fait avec une vitesse comprise entre 15 et 25 m/s.

4. Procédé suivant l'une des revendications 1 à 3, caractérisé en ce que la durée de séjour des vapeurs se situe entre 0,6 et 1 s.

5. Procédé suivant l'une des revendications 1 à 4, caractérisé en ce que les solutions aqueuses d'acide fluosilicique obtenues possèdent une concentration en $H_2SiF_6$ comprise entre 20 et 28% en poids.

## Claims

1. A process for isolating fluorine compounds from the vapors obtained when evaporatively concentrating phosphoric acid, by scrubbing the vapors with an aqueous solution of fluosilicic acid under reduced pressure and at a temperature at which condensation of steam is substantially avoided, characterized in that the aqueous solution of fluosilicic acid is injected at a speed of from 15 m/s to 40 m/s into the upper part of a scrubbing zone, finely distributed over the entire cross-section of the scrubbing zone, and the vapors are passed through the scrubbing zone at a speed of from 5 m/s to 30 m/s, co-current with the aqueous fluorsilicic acid solution, the residence time being from 0.4 to 1,5 s.

2. A process as claimed in claim 1, characterized in that the aqueous fluosilicic acid solution is injected into the scrubbing zone at a speed of from 20 to 30 m/s.

3. A process as claimed in claim 1 or 2, characterized in that the vapors are passed through the scrubbing zone at a speed of from 15 to 25 m/s.

4. A process as claimed in claims 1 to 3, characterized in that the residence time of the vapors is from 0.6 to 1 s.

5. A process as claimed in claims 1 to 4, characterized in that the aqueous solutions of the fluosilicic acid obtained contains from 20 to 28% by weight of $H_2SiF_6$.